# EUROPEAN PATENT APPLICATION

(11) **EP 2 293 598 A2**
(43) Date of publication of application: **09.03.2011**
(21) Application number: 10445005.1
(22) Date of filing: 30.07.2010
(51) Int. Cl.: H04R 5/033, G06F 3/01

(54) **Menusystem**

(30) Priority: 31.07.2009 SE 0901051
(71) Applicant: De La Fe Dahlin, Carlos, 11663 Stockholm (SE)
(72) Inventor: De La Fe Dahlin, Carlos, 11663 Stockholm (SE)

(57) **Abstract**

The invention is an audial meny system, where sounds represents the options. For a certain implementation of the invention choices is made with head movements that is detected by motion sensors contained in a headset.

## Description

### Background

Humans have a good ability to, among many different sounds, localize and choose to listen only to the sound she finds interesting and relevant. Examples are restaurants, bars etc. where her brain can choose to filter away the voices/conversations that are of no relevance for her. As a help for doing the filtration she has the positions in the room of the different conversations, and their sound volumes etc.

When a musical piece is arranged, it is favorable to chose instrument so that these are spread evenly in the audible frequency span, and to spread the sounds from the different instruments so that the listener experiences as if they comes from different directions. When the instruments are chosen in such a way, that their sounds are evenly spread in the frequency span, the different instruments are experienced as being more clear. They are therefore more easily identified by a listener.
This description, that the instruments are made to be experienced as if they were coming from different directions, means that the listening experience is as if the instruments would have been placed in a real physical room.
This can be compared to the situation of listening to a live performance of a symphony orchestra, where the audience is able to more or less hear from what direction a certain instrument is being played from.
Such a spatial placement of an instrument can be achieved with the mixing console in, for example, one of the following ways.
- By playing the sound from the instrument with a stronger volume in one of the phone/headset/loudspeaker/headspeaker than in the other phone/headset/loudspeaker. The invention does of course not confine to such a system.
- By playing the sound from the instrument earlier in one of the phone/headset/loudspeaker/headspeaker than in the other phone/headset/loudspeaker/headspeaker the experience that the sound is coming from a certain direction is simulated. The sound is being phase shifted. Compare with the situation where a real instrument is being placed in front and to the left of a persons face, where the sound reach one of the ears earlier than the other ear.

One can think of many ways to simulate a spatial placement of a sound or piece/tunes. The different techniques for simulating a placement in the audio space is known technique. The number of tunes/music pieces that a cell phone 5, MP3-player 5 or IPOD 5 must be able to contain increases. With softwares as for example Spotify the number of available tunes/music pieces that can be accessed are almost unlimited. To be able to navigate between different songs, so a song can be chosen to listen at, is becoming more and more important. Choices in the menu system of today are done via a graphical interface. To be able to choose a song to listen to in a visual interface one must have knowledge about the name of the artist, the name of the song or album etc. But what is most important for a user is the music experience that he searches for.

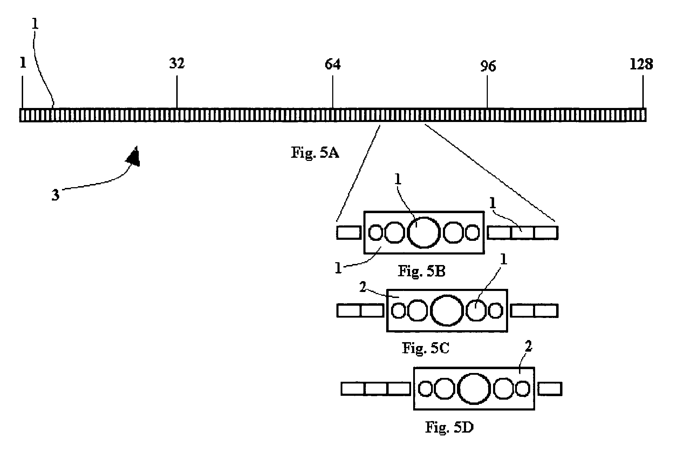

One way to make it easier to choose a song, is to order the songs in a list 3, see Fig. 5 so that songs that are experienced in a similar way by the listener are placed close to each other in the list. Of course this means that different listeners will have a somewhat different order, because their listening experience differ. What is significant for an experience or how the procedure of sorting the list is done is not an object for this invention. However, the order of such a list differ most probably between different listeners. Most probably some sort of AI is used that learns the behavior of the listener when choosing songs.

### Characteristics of the invention

One of the intentions of the invention is to enable a user/listener to give input to a cellphone or the alike without the need of using a hand for this. This is achieved by moving the head (32), accordning to caracteristical movements, that is captured by motion sensors (6) that are incorporated in the earphones (4).
One of the general purposes of the invention is to enable a user of for example a cellphone (5) or the alike to make choices, in for example a menu, without the need of seeing the options (1), (50), (9) as when they are being represented by graphical symbols presented on a screen. For this purpose the choices are instead presented in the earphone (4) as sounds.
The sounds (50), that represents options, are preferably chosen in a way so that they represent the options as good as possible. For a choice that in its graphical counterpart would be represented by an envelope (as you choose if you want to come to a state from where its possible to send sms), the audial representation could be for example the very ripping of an envelope to symbolize this option. The option in a menu to play a certain song could for example represented by a characteristic part of that song.

To make it possible to make a choice from a number of options, when they are represented by sounds, it is necessary that those sounds are being presented in a way so that they are set apart/isolated from each other.
In the following ways, sounds can be made separate from each other/isolated/distinguished:
1. By playing the sounds spread in time: Let's say that three options A, B and C shall be presented in the loudspeaker/headset as sounds. Then the first sound A (or parts of sound A) is played, then sound B and then sound C, and then sound A again. The sounds alternate.
2. By playing them in the loudspeakers/headset in such a way that they seems to come from different directions, that is as if they where placed differently in the physical space.
3. By a combination of 1 and 2 above.
4. In a way described below.

When a separation/isolation of the menu options is done accordning to number 1 above, the user can for example make a choice by specifying the sound's number of order in the sequence it is played in. If for example choice B is wanted it is made by specifying the number two. When a separation/isolation accordning to nr 2 above is used, a choice is made by specifying the spatial reference of that sound/choice.
If for example an option, that is represented by a sound that seems to be coming from a source playced to the left is to be elected, the sounds spatial reference is specified: for example by pushing the left arrow at the playing device 5.
When a separation/isolation accordning to nr 3 above is used, a choice can be made by specifying the sounds spatial reference.

The music player that the invention concerns can be incorporated in a mobile device (5), for example a cellphone, a MP3-player. IPOD, or a PC. The music that is played via the player (5) can either be stored in the player itself (for example in a memory card) or be streamed to the player when the player is connected to a network, for example Internet.

One of the purposes of this invention is to offer a listener the possibility to navigate between the songs that are stored in the player, or that are streamed.

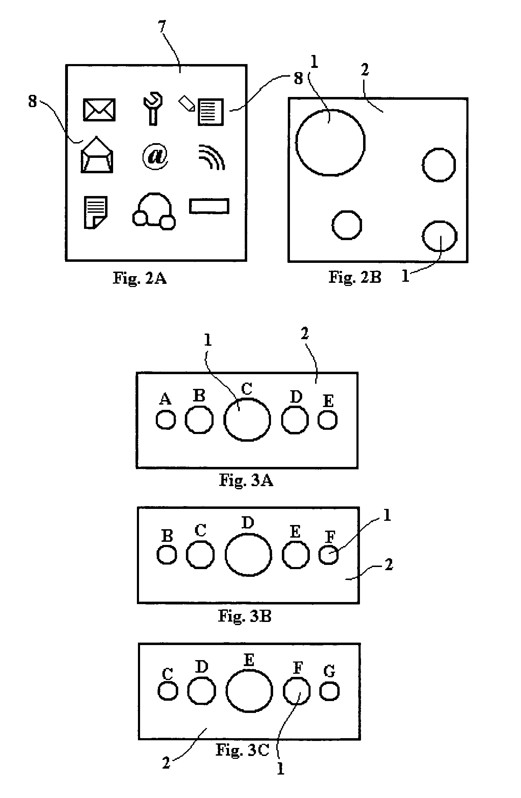

This is for example done by playing a number of representative songs at the same time, see for example Fig. 2B. In Fig. 2B the songs (1) are symbolized by rings whose size symbolizes the volume that the songs are played with, and the positions of the rings symbolizes the experienced position in the audial space. These songs (1) are positioned/placed in the audial space, accordning to above and in such a way that the user is given the possiblilty to associate those songs with their corresponding spatial position/direction/coordinate. Note also that instead of playback songs, representative parts of the songs can be played, or pieces of sound that in some sense are associated with a particular song, or a particular genre.

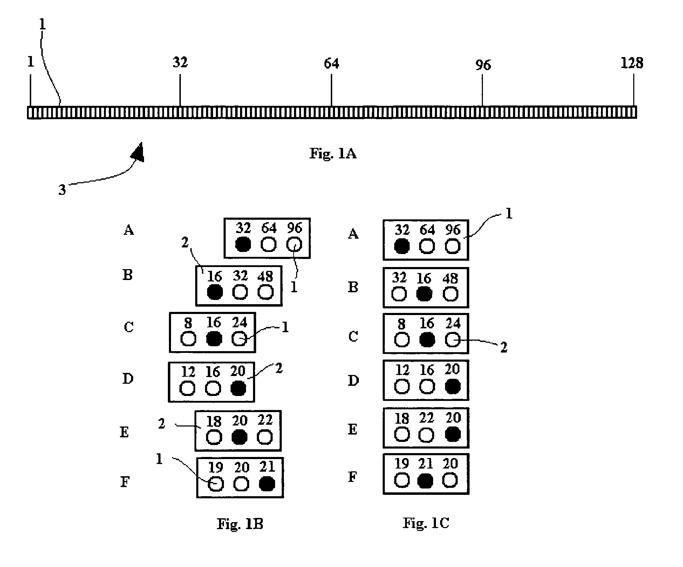

For example:
Lets say that for one embodiment of the invention the musicplayer (5) stores songs (in the scope of the invention they can just as well be streamed), where the songs are sorted accordning to tempo/beat. Note that this is just an example of how the classification/sorting of songs can be made.
Lets assume that the songs/tracks are ordered in a list (3), see Fig. 1A, where the song/track (1) with the slowest tempo/beat are positioned first and the song/track with the highest tempo/beat are positioned last. Here we assume that tempo/beat, for the listener we regard when ordering the list, is an important factor in what gives the listener his listener experience.
Let's say that the number of songs/tracks (1) is 128, see Fig. 1A.
Suitable songs/tracks to start with (the first node in the search tree) could for example be number 32, number 64 and 96. Those songs/tracks (options) are played simultaneously, but could as well be played in a sequence after each other, or as a result of for example the users head movements.

The songs/tracks 32, 64 and 96 are good to start with because the listener reaches the song/track he wants to listen to after approximately six choices, and also because the difference between how the listener experience the songs/tracks (at least with regards to tempo) is large, which at least initially helps him to distinguish between the songs/tracks (menu options) when (if) they are being played simultaneously.

The precise number of three songs/tracks, and not another number of sounds played simultaneosly in the audial space, is arbitrary. It could as well have been four number of songs/tracks that were played simultainuosly, or for example two; one in eatch earphone, or the two songs/tracks could be played after eatch other in a sequence.

The listener is then choosing song/track (of the ones that are played simultaineously, and are playced in different locations in the *audial space*) for example by choosing up, down, right or left arrow key on the players (5) key set.

The Up arrow key is for example used to choose the song that is played straight in front of the listeners face, right and left arrow key is for example used to choose the song/track that is played at the side of the listeners face, and down arrow key is for example used to playback a song/track that is played behind the listeners face/head.

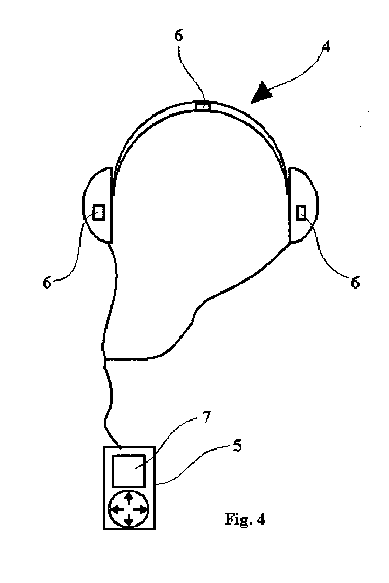

One other way to choose one song/sound out of many songs/sounds that are being played at the same time is to use at least one sensor (6) that can track/detect movements, and that is contained within, or attached to a headset (4), see Fig. 4, 9, 10 or Fig. 13, 14. With for example a movement of the head towards the direction from where the song/sound is percieved to come from, that song/sound is being chosen.

An alternative solution could be that a sensor (6) that can detect movments, is attached to or contained within the player (5), a song/sound (1) can be chosen by for example by pointing the player in a certain direction, for example towards the song (1) that is wished to be heard, or by rotating/angling the player (5), or by shaking it or by hittning it in certain ways.

One way to make it easier to distinguish between the songs/sounds (1) could be to play the song/sound (1) that is being looked at with a stronger volume than the others. The expression "looked at" just loosely refer to the sound that is being held under focus, which for example could be the sound that is experienced to be positioned in front of the listerens nose.
One other possible way to make it easier to distingusish between a set of simultaineously played songs/sounds could be that the invention/system makes smart guesses about what sound/song among many simultaneously played souds/songs that the user probably is going to choose, and highlights it, for example by playing it at a higher volume. In such a way the user is guided in a certain direction through the search-tree.

### Descriptions of the figures

In Fig. 1A a list 3 containing songs 1 is shown. The list is preferably ordered in accordning to how the listener exeperience the songs. For example: the most sad song is located first in the list, and the most happy song is located last.
In Fig. 1B a scenario is shown of when the user chooses a song in the audial space 2. First the song at position 32, 64 and 96 is being played simultaneously in the audial space 2. In the figure the songs 1 is being depicted by circles and a choice is depicted as a complete circle. The rectangle that surrounds the songs depicts the audial space (2) where the songs/sounds are being played. The letters A to F depics the different *situations of choise.*
In Fig.1C the audial space 2 *is* shown for different *choice-situations.* Here the song, that is being chosen, keeps its spatial position into the new choice situation.
   Note that a menu means a set of options. Choosing one option could lead to one or more options or to the final destination that could be the startup of an application, the playing of a song, the startup of a telephone call or whatever the user wishes to do..An *audial menu* means a menu where the options is represented by sounds.
In Fig. 2A a graphical display 7 is shown, and in it nine options is being presented. The choices are represented by graphical symbols (8).
In Fig. 2B *the audial space 2* is shown where songs/sounds 1 is played. In the *audial space* the songs/sounds 1 are placed. The songs/sounds are depicted by circles 1 whose size symbolize the space it take in the audial space. The amount of well/space that a sound/song takes of the audial spacer most often correlates with how much attention it gets by a user, but is not eqivalent to it. This amount of attention, or the amount of space a sound/song takes in the audial room can be regulated by for example the volume it is played at, or be regulated by the way it is filtered in. It is however probably desirable to let a sound/song take as little space of the audial space as possible, so it is not mixed and blurred with near songs/sounds.
In Fig. 3 a set of options 1 is playced in the audial space 2. The songs/sounds can be solitary sounds or can be hole songs/pieces. In Fig. 3A-3C is shown how the songs/sounds moves in the audial space 2 from left ro right. The sounds/songs can for example represent a scrol-list.
Fig. 4 shows a headset 4, three sensors for detecting movements 6 that is attached ro the headset 4, and a music player 5 with a display 7.
Fig. 5A shows a list 3 with sounds/songs 1.
Fig. 5A shows a magnified selection of the list 3. Five of the songs/sounds is being played in the audial space.
Fig. 5C shows a new point in time. In this figure the sounds/songs 1 has moved one step to the left in the audial space 2. One new song/sound has entered the audial space 2 from the right, and one has leaved out to the left.. NOTE: the songs/sounds as in the very most part of this document represents options.
Fig. 5D shows a new point in time. Here the sounds/songs 1 has moved one step to the left in the audial space 2. One new song has entered from the right, and one has leaved the audial space to the left.

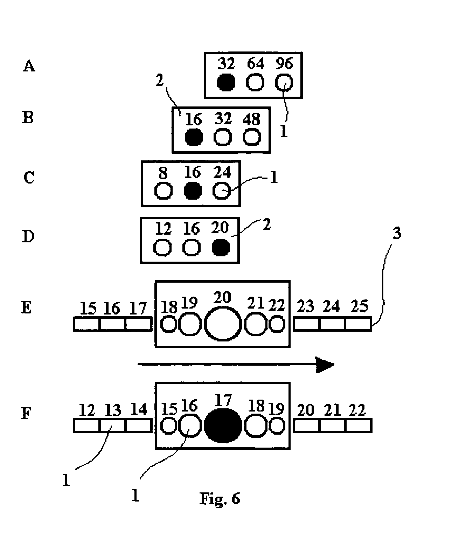

Fig. 6 shows an audial space 2 where initially three songs/sounds are played, positioned at different places in the audial space 2. The figure shows an example of a typical scenario from the list 3: At the choise-situation A sound nr. 32 is choosen, at the choise-situation B sound nr. 16, at the chiise-situation C sound nr. 16 is choosen and at the choise-situation D the sound nr. 20 is choosen. The next choise-situation means that a segment from the list 3 is placed (that is being played) in the audial space 2, in the center sound nr. 20 is positioned. After scrolling has been made (to the right) in the list 3 song nr. 17 is being choosen as the song that the listener wants to listen at. In the figure that song is depicted as black. Note that the scrolllist that is being presented in the audial space can contain one song.

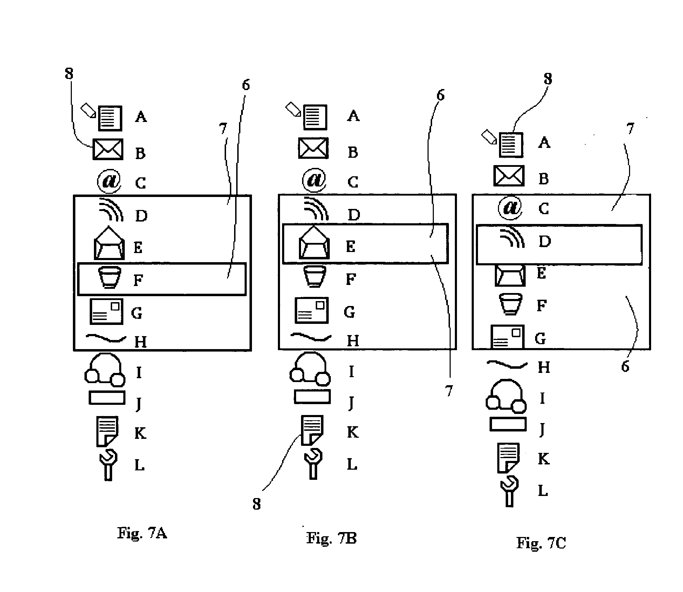

Fig. 7A shows a display 7, incorporated in for example a cellphone. In the display 7 five symbols 8 is shown, and one of them is marked 6. Those symbols that in the figure is positioned outside the display 7 symbolizes the symbols that are next in line to be scrolled into the display or further away from it.
Fig. 7B shows the appereance of a graphical display 8 after that an uppward scrolling has been made in the list. The scrolling has for example been made by pushing the up-arrowbutton at a cellphone, or by a registering characteristical head movemnet of the user, that has results in that the mark 6 has jumped one step up in the list.
Fig. 7C shows the appereance when uppwards scrolling has been done one more time, by for example pushing the up-arrow-buttom once more. Here the list has been moved downwards one step in the display.

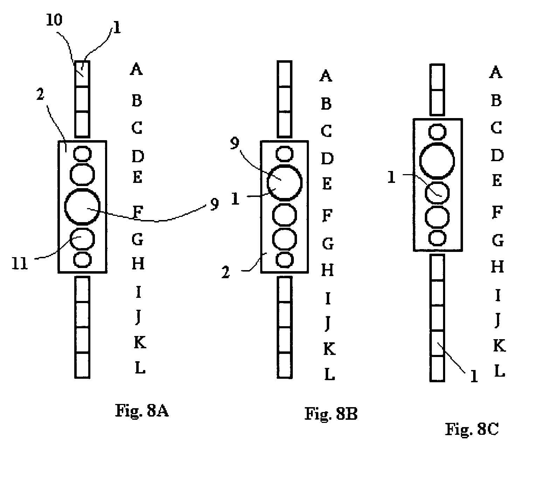

Fig. 8A shows an audial space 2, the audial equivalent to the graphical display that is shown in Fig. 7. Here five sounds 11 is played. The sounds are positioned at different positions in the audial space 2. The sounds is preferable chosen in such a way that they fairly well symbolize the options they represent. In fig. 8A the marked sound 9 is positioned in the middle of the audial space 2. That it is marked is depicted with a large circle. The marking can for example be made by playing the sound at a higher volume. The sounds 10 outside the audial space 2 depicts sound that are awaiting to, when scrolling is made, move into or further away from the audial space 2.
Fig. 8B shows the marking 9 when it has moved in the audial space 2, as a result of scolling. Note that the sounds do not move through the audial space 2 when scrolling is made, it is the marker 9 that moves when scrolling is made. The scrolling list could however be built-up in such a way so the actual sound was moving when scrolling was made.
Fig. 8C shows an audial space 2 wherein the sounds has moved one step down, and one sound has moved into the space 2 from above, and one has moved out of the audial room at below.

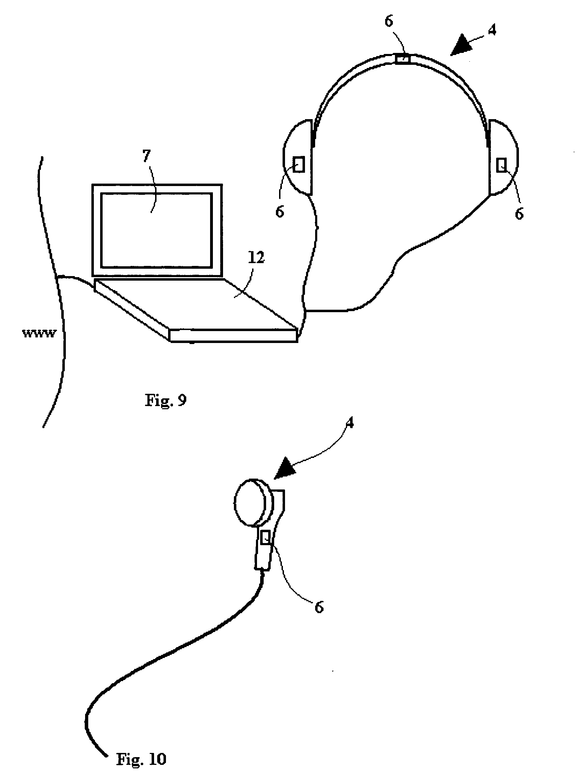

Fig. 9 shows a PC 12 and a headset 4 and sensor that can detect movements 6. the PC is connected to the internet.
Fig. 10 shows a headset 4 that can be inserted into an ear, and a sensor 6 for detecting movements.

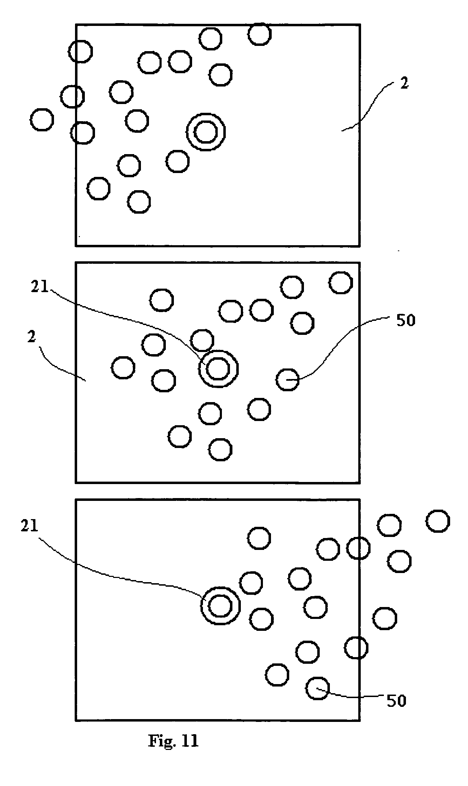

Fig. 11 shows a audial space 2 through which sounds (depicted as circles in the figure) moves from left to the right. New sounds moves into the middle 21 and are being highlighted/marked there. This is for example made by playing a sound at a higher volume, or at another character.

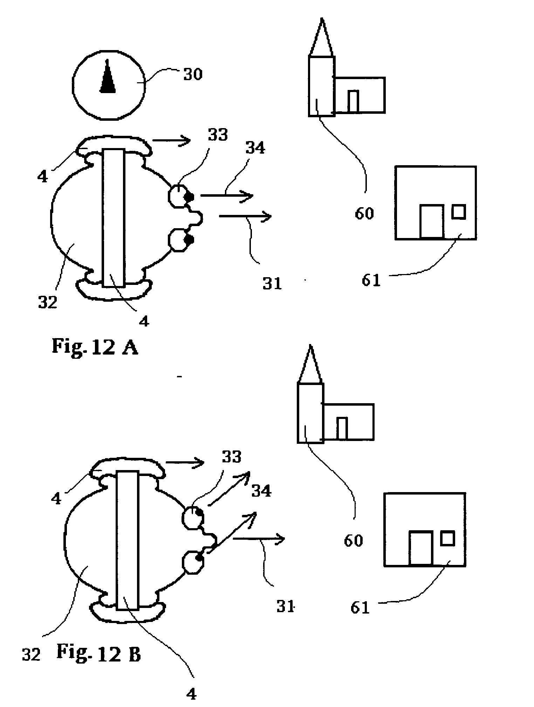

Fig. 12 shows a head 32 from above with headsets 4. Eyes 33 that looks in a certain direction 34. The face is directed at a certain direction 31. The face is directed at a church 60 and at a hotell 61.

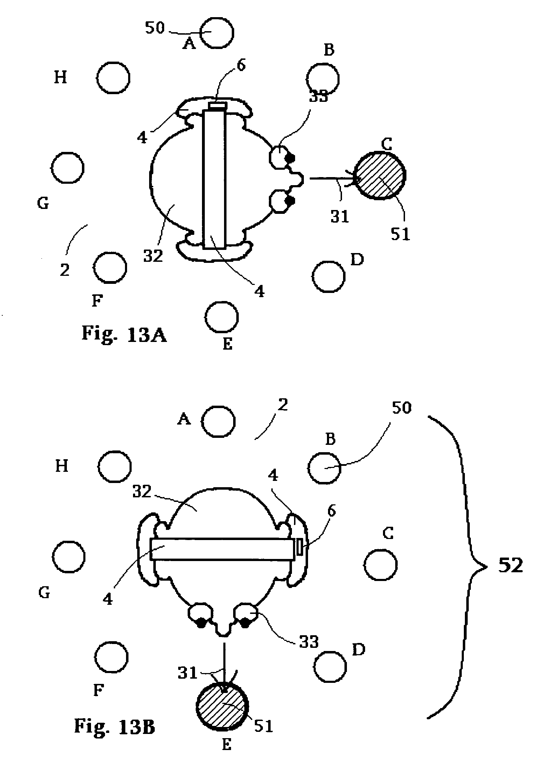

Fig. 13 shows a head 32 from above. In the headset 4 sounds 52 is being played:A, B, C, D, E, F, G, H. A certain sound 51 is played right infront of the users face.

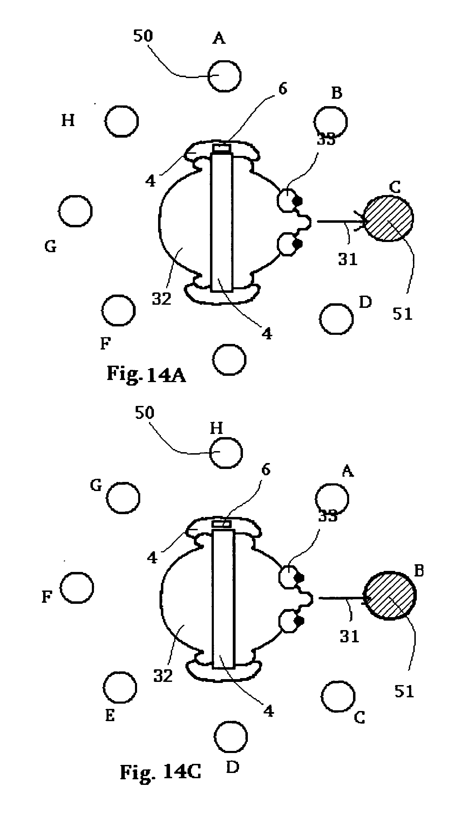

Fig. 14 shows a head 32 from above.

### One prefereable implementation of the invention

In Fig. 4 a headset 4 that contains movements sensors 6. A movement sensor could for example be an accelerometer, or a gyrometer/gyrosensor 6. To the headset 4 a musicplayer 5 is connected (in the figure a cable is shown but the connection could as well be wireless).
For this implementation the songs is stored within the player 5.
The list 3 is preferable ordered in regard to how the songs 1 is experienced by a user. That means that songs 1 that are experienced in a similar way are positioned in the list close to eatch other, and that songs that are experienced in a different way, and that probably is being listend at in different moods, is positioned far from eatch other in the list 3.

Let for example assume that the list contains 128 songs, as the list in Fig. 1A.
When the user wants to chose a song from the list 3 to listen at, first song 32, 64 and 96 is being played in his headset, or sounds that represent those songs or the gengre that the songs (32, 64 and 96) represents.
For this implementation the songs are played simultaneously. In Fig. 1B the rectangle depicts the audial space 2 where the options 1 is played.
The first options 1 that is played is depicted as circles in the topmost rectangle in Fig. 1A. The options (sounds that that represents the songs) are here spread in the audial space and can be accociated with a spatial coordinate/direction.
.By making a head movement, for example in a direction towards one of the three songs, the user chooses the song that he believes lies closest to the song he wishes ro choose to listen at. For this specific example scenario the user chooses song nr 32, see Fig. 1B. This song is the song among the songs 32, 64 and 128 that the user consider to be closest to the song that he searches for.
This choice takes him to three new songs, nr 16, 32 and 48, see Fig. 1B. From those he chooses nr 16. In this way he search his way closer and closer to the song he wants ro listen at, and in this example he reaches this song after six choises. In this example that song is nr 21 that is being played to him.
The first choice, that in Fig. 1B happens to be song n 32, is located at the left in the audial space 2.
At the next choice situation the songs (options) 16 and 48 has entered into the audial space 2. The song that is being chosen is preferble played at the same loocation in the audial space 2 as it was located at in the earlier situation of choice, see Fig. 1C. Note that insted of playing the songs in the choice ituation, sounds that represents the songs, or the genre, can be played. The seach procedure described above, is used ro reach all the way ro the wanted song. An implemetation of the invention could however change the search procedure before reaching all the way to the wanted song, see Fig. 6.
Say for example that 128 songs are stored in the list 3 and that the seaching strarts by letting the user chooses one of three songs, as is described above.
After four choices has been made, the search procedure is changed: now a list of songs (or parts of songs, or sounds that is easily accocited with the songs, or easily associetd with the feeling that the songs supposes to evoke), here a selection of the list 3.
The song that initially has focuse, and that is located in the middle of the audial room 2 where the scrolllist is presented, is in this example song nr. 20.
From this state the list is scrolled, with headmovements, in this example at the left or at the right. The scrolling is made untill nr 17 is reached, and then is listened at by the user.

### A second embodiment of the invention

In Fig. 3A-3C is shown how songs/sounds 1 moves through the audial space 2 from the right to the left. The songs/sounds 1 constitutes an audiell scrolllist. The scrolllist can move thruogh the audial room automatically or it can be pulled by a user, at the left or at the right. The pulling of the scrolllist can for example be made by head movements, that is detected by movements sensors 6, or by moving the musicplayer 5 (this assumes it has been incorporated with movements sensors) or the pulling of the scroll list can be made in a graphical user interface incorparated in the musicplayer.

### A third embodiments of the invention

Fig. 7 shows a graphical display 7 at for example a cellphone 5. Fig. 7A to 7C shows scrolling in a list of symbols 8.
This implementation of the invention concerns a mobile device 5, for example a cellphone with user interface 7, as Fig. 7 suggests.
The cellphone 5 is connected to headset 4 that contains motion/movemnets sensors 6 (at least one). The scrolling is made in the graphical display 7 either in a traditional way by using the set of buttons at the cell phone, or by moving the cell phone (those movements is detected by movements detectors in the cell phone), or by head movements done by the user, see Fig. 7. Scrolling means that the sounds that represents different options moves through the audial space 2.
Note that even if the scrolling is done via the graphical user inteface, the scrolling itself is represented by movements of sounds in the audial space. When the user both sees the symbol on the displey, and hears the corresponding sound it helps him to learn what sound that corresponds with a certain option.
This mode could be a pure learning mode. Note that movements of the headset doesn't need to be used to learn what sound that corresponds to a certain symbol on the graphical user interface (that is correspond to an option). In the learning mode the cell phone can rather play one sound at a time.
This implementaion of the invention has two modes: one learning mode (described above) and one active mode. In the active mode the scrolling is done with head movements, and scrolling and navigation in the menu-system (in fig. 7 and 8 the menu system is depicted as a scrolling list) is made possible without using hands or even without using the graphical display.
In the active mode a number of sounds 1, corresponding to the symbols 8, see Fig. 7 is played in the audial space 2, see Fig. 8. For this implementation of the invention one of the sounds 1 is marked 9.
That a sound is marked means for this implementaion that it is played with a higher volume than the other sounds that is played at the same time. Note that there is other ways to enhance a sound than just raising its volume, for example different kinds of filtetering of the sound could be made.
For this implementation uppwards-scrolling is done by tilting the head up, and downwards scrolling is done by tilting the head down.
When a choice shall be made: First the user moves his head in such a way so the desired option/sound is marked, then the user moves his head towards it. Note that those two different typical movements is examples of characteristical movements.

Note that if no menu is presented in the audial space 2, for example when a conversation is taken placed in the headset 4, choices can anyway be done with head movements. The menu could be shown in the graphical display even if a conversation takes placed in the headset 4, and no audial menu is presented in the headset.

### Others

In this document the expression "audial space" means the "imaginary" 3-dimensional space that sound that represents options in a menu is played.

Note that in a real psychical space sounds can be generated at a certain and real spatial position, in oposite to the audial space where all sounds is generated by the loudspeakers but in such a way so they are experienced as if they where generated at a certain spatial position.

The headset is preferably included in a system together with the device they.

The mobile device can be a cell phone, a mp3-player, an IPOD or another device that has the property that it can, directly or indirectly, play sounds and that it independently or together with the headset or connected to a network for example internet can contain a menu.

The expression *characteristical* movement for example refer to for example that the system understands it as an order ro perform something.

The order can include a spatial referens to a certain sound/song 1. An example of such a head movement can be a nod directed towards a certain sound 1.

However the order doesn't need to include such a spatial referens. An example of an order that doesnt contain a spatial referens ro a sound could be when an audial scroll list wants to be scrolled to the right or to the left.

Example of such a head movements can be to turn the head to the left or turn it to the right. Note that a visual scrollist in a display can be moved back and forth with head movemnets as well as with the cellphones button set.

As a motion sensor a gyrometer is preferable used that is used to detect changes in angles. Alternatively an accelerometer is used ro detect translations. An accelerometer can also be used ro detect changes in angles. For example by detecting projektions of the g-vektor. Alternatively a combination of gyroskpoe and acceleratmeter is used.

If a head with a headset 4 is within a moving reference frame, such as a car, bus etc. the system/invention can mistakenly interpret a movement/rotation of the reference frame as a characteristical movement. A way to avoid this kan be as following:

The mobile device is supplied with at least one movement sensor whose movements is subtracted from the movements of the headset. This means that movements that comes from pure referece movemnets can be cancelled away.

The expression *menu* means a set of options or a structure, see Fig. 1, 5, 6, 7 that allows a user to navigate though it, with the purpose to directly or finally give the system full information of what the user wants the system to do: for example to play a certain song or to reach a certain mode from where a sms can be written.

A part of the structure, in where choices can be made, are presented in an audial space. One or many choices can be presented simultainously in that space.

Note that when the term *menu* is used it referce to a structure in wich choises can be made that either is graphical, see Fig. 7, or audial, see Fig. 8.

Note that when the expression *scroll list* is used it refer to a graphical scroll list, see Fig. 7 or an audial scroll list, see Fig. 8.

Note that when the expression *scrolll list* occurs in this document it falls under the definition of what a menu is.

The audial space 2, 7 where choices is made can be either visual 7 or audial 2. The space is visual when the choices is presented as symbols 8 or texts in a graphical display 7.

Note that what most often happens when a scroll list is pulled, for example one step to the right or one step at the left, is that a reorganisation of the presented options is made and that new options is presented and that old options removes out from the audial space.

Lets say that a menu is at hand that has the purpose to make it easy ro find a song that the user wants ro keep listen at, and say that the menu is a tree structure, see Fig. 1, that starts from a list 3 where the songs is being sorted with respect to how they are experienced, or percieved.

In this way the user doesn't need to know exactly what song that he wishes to listen at, because he moves closer and closer to the exeperience he wants. It is also possible that he finds a song that he like, and that he never has heard before.

Note that a menu containes a set of options. Also note that except those options a user can perform *meta choices.*

A meta option is for example an option that concerns what set of option that is going to be presented.

Examples of such meta choices is the choice to scroll a list one step to the right. The expression choice includes, in this document, the term meta choice.

Note that the expression *sound* refer to an arbitrary sound: it could for example be generated by an instrument or by many instruments, or by a voice or generated digitally in a compter. It can be of any length.

The expression headset 4 refer to one piece of loudspeaker that can be playced close ro an ear, or a pair of loudspeakers that can be played close to two ears.

The geometrical shape of a headset can be so it covers the ears, see Fig. 4, or so it can be inserted into an ear, see Fig. 9.

In this document the expression headset refer to all different variations of headsets.

With an audial menu-system means that choices is presented with the help of sounds.

Central here is that choices in some sense kan be isolated, or be separeted from eatch other.. This in regard to let them be choosen, that is to enable choices to be made in the audial menu system.

More examples of different embodiments of the invention of audial menu systems are presented below. The embodiments is examples of how choices can be presented for the user, and how they can be choosen.

### Audial menu system - a fourth implementation

Suppse that a headset 4 is connected to a device 5, 12, for example a cell phone, a mp3-player or a computer.
For this implementation of the invention one choice (sound) is presented (played) in the right loud speaker, and another choice in the other loud speaker..
They can be played simultaneously or altering after each other. By for example pressing the right arrow key at the device 5 the user chooses the option that is represented by the sound that is played in the right headspeaker 4, by pressing left arrow on the device 5 the option that represents by the sound that is played in the left phone 4 is choosed.
Note for example that the device 5 can be played in a pocket when the choice is made, and that there is no need to look at a graphical user interface or ro be able to do the choice, and note the convenience of this. To have the sight free is very favorable, for example in the trafic.
When the choices have been made two new choices can for example be presented in a mentioned way,. In such a way it is possible ro navigate down a tree sructure untill the user reaches the final end option.
The choices are for this embodiment of the invention isolated from eatch other by playing the sounds in different phones, which makes it possible for the user to identify the two options. To further enhance the two options the two sounds can be played repeatedly after eatch other: first one of the sound is played in one of the phones in a certain period of times (for example 0.5 sceonds), then the second sound is played in the other phone at a certain period of times (for example 0,6 seconds).
This *binary* audial menu system can for example be used to find a certain post in a list.
So, a choice is done by pressing buttons on the device, or by moving it, or by moving the head 32 (and the headset) and/or positioned the head at a certain position/orientation and to let at least one movement sensor, orientation sensor, position sensor 6 included in the headset 4 detects the heads movements/orientation/positioned.
For example: lets say both options are played in eatch phone 4, and that the right option wishes to be performed by the user, then the user tilts his head 32 at the right and in that way the choice is made. Similar for the other choice.

### Sensor for detection of movements and/or rotation and/or positions.

The sensor 6 can for example be implemented by an accelerometer that register the head movements, via the headset 4.
The sensor 6 can for example be a gyrometer that register head rotations. Note that head rotations also can be register by an accelerometer.
The sensor 6 can be at least one compass 30. The sensor can be at least a GPS. Or a combination of those. By analysing the signals those sensors 6 exports either the heads movements or the heads position or orientation can be used as input to the system, or a combination of these.
Preferable the processor of the device 5 is used ro analyse the siglas from the sensors, and to judge when a characteristical head movements is performed, and how it should be interpret. In this way the system decides when and what choices the user wants to perform.
But it is also possible that the headset itself containes a processor (or simpler electronics) so the analysis can be done in the headset, or by combining the processor in the headset with the processor in the device.
Eventually the headset itself containes electrical components that is specially suitable to perform a part of the analysis, and then let the device finish the analys.

### Detection of the movements of the head and/or positioning and/or orientation relative to the body (as the head is fastened at):

When detecting the movements/rotations/positions of the headset by using a movements/rotations/positions-sensor regards neeed to be taken to the movements/rotations/positions of the reference frame, that for example can be a buss, an air plane, a bicycle or a car.
For example a fast turn of a bus could misstakenly be interpretated by the system, when the user sits in the bus, as an order to the system (a choice is mistakenly made).
One way to solve this would be to detect the movements/rotations/positions of the head 32 relative to the body.
A sufficiant method ro detect the users Is body would be ro detect the handhold device 4 (for exaple a cell phone)
Very often the device 4 is moving, for example when it is held in a hand or when it is played in a pocket when the user sits for example i a bus.
This means that the absolute movemnets of the handheld device reflects the bodies absolute movements well in some situations and less well in others: if for example the device is placed in a pocket it is probably pretty well reflected, but if it is placed in a hand it is probably pretty bad reflected since the hand often moves.
But, mainly the movements of the device 5 reflects the bodies movemnet fairly well.
Let the hand hold device include at least one movements sensor and/or one orientation sensor and/or one position sensor and/or one GPS and/or one compass.
With a sensor one of those just mentioned implementation or a combination of these is meant. By subtracting the movements that the sensor/sensors 6 incorporated in the headset 4 detects from the movemnets and/or orientations and/or positioneing that the sensor incorporated in the handheld device, the relative movement between the headset 4 and the body is calculated. So, this difference corresponds to the headsets relative movements to the handheld device, that mainly also is relative to the users body.

This is a way to filter away unwanted movements, and ro recieve wanted movements for example the heads movemnet relative to the body.

### Audial menu system - a fifth embodiment of the invention.

By playing a sound in both ear phones 4 with a phase shift a spatial experience (the sounds is perfcieved as if it had a spatial positioning) of the sound can be percieved by the user.
There is also other known ways to create the experience that a sound have a spatial positioning.
Lets say that many sounds (options) are manipulated so they are percieved as having a spatial position.
See Fig.11 where the circles depicts sounds that are played in the headset. With for example key arrows, or by moving or tilting the device 5 the sounds can be controlled by the user so that they moves through the audiel space 2, see Fig 11 A-C that shows such a movement from the left to the right.
In this way a new sound (option 50) can by directed into the midde of the audial space 21. In
Fig. 11 a sound is moved into the middle of the audial space. This is depicted by an extra circlesurronding the crircle that depicts the sound.
That a sound is placed in the middle of the audial space means that it is played straight infront of the listener, that is, there is no phase-shift between right and left earphone, and that no difference in volume exists between the right and left earphone.
For example the character of the sound can be modified to further indicate that the sound has been moved into the middle. Such a change of the sound can be made by using reverb.
Note that this modification of the character can be compared with the highligthing/marking of a graphical object in a display.
Also note that all sounds can have the same volume and that it is not central to the invention to change it when it is moved into the middle.
The modification of a sound Is character can for example be done when it reaches a certain position.
The sound (option) that is positioned in the middle of the audial space is highlighted/enhanced.
By pressing a button, or for example controling a joystick-like lever, or by moving/turning the handheld device 5 the highlighted sound is chosen.
Instead of moving aroundt the sound via a graphical interface 7 head movements can be used to move them around, by using sensors that is described above.
Note that the translation of the sounds, as is shown in Fig.11, constitutes an example of how the sounds 1, 50 can be moved through the audial space 2.
An arbitrary movement/transformation of the sounds in the audial space can of course be made. For example zooming can be done of the sounds that the face is directed towards. "Out zoomingcan for example mean that a set of sounds in the audial space 2 is percieved by the user as if they moves away from the user untill they finaly moves out of the audial space 2, and is nomore played.
See Fig. 13 that shows another example of an audial space 2. The sound 50, 51, represents options 50, 51, is spread in a circle 52 (or part of a circle) around the head 32 of the user and the headset 4. The sound that is placed infront of the face 51 can for example be highlighted/marked.

When a head-rotation is detected by the sensors 6 included in the headset the cricle of sounds can be made rotate This means that the sounds changes its positions in the audial space 2.
In this example the rotational direction of the sounds is opposite to the rotational direction of the head.
In Fig. 13 the sounds 52 rotates anticlockwise relative to the head 32 but is still relative to the earth, and the head rotates clockwise, see Fig. 13A and 13B.
In this way the user experiences that the sound hangs in the air and that he turns his head among them.
When he turns his head new sounds enters infront of his face 51. In Fig. 13 A sound C is placed infront of his face, but in Fig. 13B the sound E is instead placed infront of his face. The user turns his head untill the wanted option 51 is positioned infront of his face.
By for example pressing a button on the device 5, or by tilting the head 32 forward or backwards the user can choose the option 51 that is infront of his face. Note that the circle of sounds 52 can turn itself with a higher rotational speed than the user turns his head 32 at. This could for example mean that when the head has turned 45 degrees the circle of sounds has turn 360 degrees.
The turning of the circle of sounds 52 can also be done by turning the handheld device or by using levers at the device.
Note the importance of isolating sounds, or set of sounds from each others, to enable them to be distinctively listen at, and therefore to be possible to choose.
The sounds can be isolated or separated by playing them separated in time or by spreading them in the audial space 2 or by letting theirs character separate them or by a combination of this. The separation is necessary for being able to discriminate.
By changing the sound picture that is played in the headset 4 as a function of head movements and/or rotations and/or positioning, preferably relative the body, the experience by the user that the sounds has spatial positions, or is moving, is enhanced.
A comparison with how the sight works: by moving the head and/or the eyes to let objects be seen from different angles, and from different distance, so that the objects seems to have different sizes relative to eatch others, the brain recieves information it can use ro build an understanding of the space the obejcts are placed in.
In an analogue way certain sounds can, when the head is moving, be placed in the back of other sounds, they are so ro say hidden. A hidden sound can for example be represented by not playing it at all or by playing it dull.
But when the user moves around in the audial space he will soon be having a different angle to and have reached a position from where he can hear the object again.
To simulate a greater distance to a sound it can be played by a ower volume or by a different character.
For example the sounds can also move independently of the users head movements. For example a circle of sounds can turn around the users head.
In Fig. 14 the circle of sounds 52 is rotated one step anticlockwise from Fig. 14A to Fig. 14B. In this scenario the user only needs ro wait for that an option shall enter into the area infront of his face, and he just clicks A click is for example done with levers, or with head movements, or by looking at a certain direction, where this direction for example is detected with the technique of EYE-tracking.
What has been mention above is examples at how the sound picture can be a function of the users headmovements.
In this way the experience that he goes towards a sound can be given to the user.

For example, the sounds could for example be placed at the same position as a real physical object. A sound of a motorbike could be placed close ro a real motorbike.
The link between the sound picture and the users movements in the real psysical space, either by walking or by head movemnets, enhances the sounds spatial charactar, and so enhances the separation of the sounds, and the easiness of choosing a sound.
Choosing option 51, 52 can for example be made by letting the user walking up to one of those options and when he is close enough it becomes highlighted, see above what highligted means.
The circle of sounds 52 can off course be placed vertical relative the horisontal plane. In this case the circle is made to rotate by tilting the users head, that is to move one of the ears closer to ground than the other.
For detecting this tilt an accelerometer is preferably used, but not necessarily. The accelerometer is preferably positioned to the headset so that two of its axes lies in the same plane that the circle of the sounds 52 and in the same plane that the head is being tilted in. The angle that the head is tilted with is then measured by reading the projection the G-vector makes onto one of the accelerometers axes.
Another example of an audial space 2 is a list of sounds. When the head is moving forward, the list moves backwards through the audial space 2 at the same speed as the head moves forwards.

This means that the user I s experience is that the list hangs besides him and that he moves next to it.
Different sounds is then played depending on how much forward he has moved his head. When the head has moved just a little bit farwards a certain sound is played, and when the head has moved much forward another sound is played.
When the head is moving forwards the present sound stops playing, and when the head keeps moving ahead another sound starts playing etc. In this way a sound is isolated and is easy to choose because it is the only sound that is being played at that time.
Note that instead of letting the sensors 6 detect head movements it can be used ro detect punches by a hand or fingers.
By punshing at one of the ear phones choices can be made. For example the options can be in a list, that is scrolled forward by hitting the headset with a finger.
New options is so to say coming into the highlighted area. By knocking a bit harder, for example, or by doing a dubble knock, the highlighted option is choosen.
Note that when the expression movement sensor is used, or only sensor, it refer to a sensor capable of detecting a bodys movements and/or rotation and/or orientation and/or positioning. Examples of such sensor is accelerometers, gyrometers, compasses or GPS Is or a combination of these.
Note that the connection bewteen the device 5 and the headset can be wire less, such as bluetooth, or can be made of many wires.

Note that one way to make the sounds separated is to play them in a sequence in time. One sound can for example be chosen directly when they are heard or they can be chosen by giving the seriel number of the wanted sound/option.

### One more embodiment of the invention - camera

For this embodiment at least one camera is connected with the headset 4 and/or the device 5, 12. The camera is filming at least one of the users eyes 33. The device can then decide at what direction the user looks, via so called eye-tracking.
The audial eniviroment 2 can consequently be varied depending on where at the display the user looks, and options in the audial enviroments 2 can be highlighted depending on where at the screen the user looks.
Lets say that the display 7 shows an icon that looks like a bird, and one icon that looks like a watch. When the user looks at the bird-icon a bird-tweet sound is played, and when he watches at the watch-icon a tick-tack-sound is played.
When the user tilts his head 32 at the same time he looks at an icon, and at the same time as the corresponding sound is played, for example a bird-tweet, the headsets 4 sensors 6 is detecting the head-tilt and a tweet is made.
When the application that the icon represents starts, the signature melodi of it is played in the headset. In this way the audial enviroment is varied as a result of where the user looks and/or how he moves/positiones his head 32.
With the expression person one or more persons is ment.
With the expression headset one or two loud speakers that can be fastened at a head is meant.

### One more embodiment of the invention - GPS.

For this embodiment the headset 4 containes at least one compass 30, and at least one movement sensor 6. For this embodiment the headset 4 is connected to a handheld device 5. And the device and/or the headset containes at least one GPS- unit.
With the help of the compass 30 the invention can decide ro what direcion 31 the user has his head poited, because the headset turns when the head turns. Note that when the user points his eyes 33 at the same direction as his face, seeFig. 12A, the device kan decide at what direction the user points his eyes. This is because the sysrtem has the compass information. Lets say that the user has his face directed towrads a certain direction, *face-direction 31,*
See Fig. 12A where the user looks to the east, that in the figure coincide with the face-dircetion. The face-direction (east) is known becasuse the compass needle 30 gives to what direction north is. The user also stands at a certain GPS-koordinate, *his gps-position.* Lets say that the hand held device 5 has access to one or a number of *known gps-positions,* that corresponds ro certain *known objects* such as restaurants, churches 60 or hotells. Those known GPS-positions can have been downloaded to his handheld device 5, or he can have continous access to them via the internet.
If we suppose that the user looks at the same direction 34 as the face-direction 31 the device can use the face-direction 31 and his GPS-poistion to calulate if he looks at one of the known gps-positions.
If he looks at some of the known GPS-positions, lets say *known-gps-1,* the device for example calculates the distance between his gps-position and the known-gps-1.
If those two gps-positions are close enoff to eatch other the device goes on calculating. But it could for example be so that the user looks at a direction towards the known-gps-1 but actually looks at for example a building that lies infront of known-gps-1 and that the objekt that known-gps-1 represents is hidden behind it.
This means that it may be necessary for the device to have information about objects that hides the sights to the known gps-positions. The device must judge if it is so that the user really looks at an object that the known gps-position represents or not.
In the case when the device estimates that the user really looks at one of the known objects (known GPS-position) information concerning this object is for example played in the headset. This information can be stored in the deice, or it can be continously provided with this information over internet..

### One scenario:

The user stands at a place and looks towards his face-direction. He is looking at for example a hotell 61, see Fig. 12A. The church is one of the known objects and to it there is sound information connected.
In this scenario a voice is first played in the users headset: you are now looking at klara-church, built 1783,,,, In this case it is information that the city offers.
Next an audial menu is played to the user and he can choose between what typ of information he wants ro take part of. The options can for example be 1. to listen at a typical piece of music that are used to be played in that specific church or. 2. take part of information concerning the opening times of the church.

### Note the following:

Note that the GPS-unit can be located in the hand held device and/or in the headset. The software that calculates what object that the person looks at can be placed in the device 5 and/or be included in the headset.

The expression *compass* means a device that can decide at what direction north is.

The movements-sensor can be built with a compass and/or a gyrometer and/or an accelerometer and/or an accelerometer..

### One more implementation of the invention camera+GPS.

In one of the implementation above it is described how the audial space 2 and the audial menu that depends on where at a display 7 a user looks, and how choices can be made by combining where at the screen 7 the user looks and how the user moves his head 32.

In the case when the device is a hand held device and when the headset containes at least one compass, the following embodiments of the invention can be implemented:
Accordning to the implementation above (GPS) the invention can decide the face-direction. With the help of eye-tracking the invention can decide to what direction the user direct his eyes reletive ro his face-direction.

When the face-direction 31 is known and when the direction 34 relative ro the face is known, the absolute look-direction can be decided. For exaple the look-direction is in northeast direction 34, see Fig. 12B, and in a direction at for example a church 60. This means that the invention can be used to detect at where a user is looking.

## Claims

1. Headset 4 **characterized in that** at least an audial menu is presented in it.

2. Headset 4 according to claim 1 **characterized in that** it containes at least one movement sensor 6, that choices in the audial menu is done by moving the headset 6 and/or that the audial picture/environment varies depending of how the headset moves and/or is positioned.

3. Headset 4 according to any of the claim above **characterized in that** it is in connection with a device 5.

4. Headset 4 according to claim 3 **characterized in that** the device 5 containes at least one camera that films at least one of the users eyes, to decide at to what direction the user looks.

5. Headset 4 accordning to any of the claim above **characterized in that** the headset 4, 7 and/or the device 5 containes at least one GPS-unit.

6. Headset 4 according to any of the claim above **characterized in that** it containes at least one compass 30, that the face-direction is calculated.

7. Headset accordning ro claim 3, 4, 5 or 6 **characterized in that** choices in an audial menu is done with levers contained within the hand hold device 5 and/or by moving/tilting it.

8. Headset according to any of the claim above **characterized in that** the choices represents by songs or parts of songs or processed song/part of song.

9. Headset accordning to any of the claim above **characterized in that** the headset 4 containes at least one levers, that choices in the audial menu is done via the levers.

10. Headset accordning to any of the claim above **characterized in that** the hand hold device containes at least one movement sensor, that the difference of the movemnt of the device and the movement of the headset is given as input to the system.
